(19) **Europäisches Patentamt**
**European Patent Office**
**Office européen des brevets**

(11) **EP 2 876 486 B1**

(12) **EUROPEAN PATENT SPECIFICATION**

(45) Date of publication and mention
of the grant of the patent:
**13.02.2019 Bulletin 2019/07**

(51) Int Cl.:
***G02C 7/04*** (2006.01)

(21) Application number: **12881285.6**

(86) International application number:
**PCT/JP2012/004582**

(22) Date of filing: **18.07.2012**

(87) International publication number:
**WO 2014/013523 (23.01.2014 Gazette 2014/04)**

(54) **CONTACT LENS AND METHOD FOR MANUFACTURING CONTACT LENS**

KONTAKTLINSE UND HERSTELLUNGSVERFAHREN FÜR DIE KONTAKTLINSE

LENTILLE DE CONTACT, ET PROCÉDÉ DE FABRICATION DE CELLE-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.05.2015 Bulletin 2015/22**

(73) Proprietor: **Menicon Co., Ltd.
Nagoya-shi, Aichi 460-0006 (JP)**

(72) Inventors:
• **GOTO, Yuji
Kasugai-shi
Aichi 487-0032 (JP)**

• **YAMAGUCHI, Hiroyuki
Nagoya-shi
Aichi 460-0006 (JP)**

(74) Representative: **Cabinet Plasseraud
66, rue de la Chaussée d'Antin
75440 Paris Cedex 09 (FR)**

(56) References cited:
**EP-A1- 2 278 387       WO-A1-2004/010204
WO-A1-2009/139021    WO-A1-2011/061790
CA-A1- 2 096 706      JP-A- 2000 089 172
JP-A- 2006 528 373    JP-A- 2007 503 017
JP-A- 2007 510 960    US-A- 5 635 998
US-A1- 2004 075 807**

**Description**

The present invention relates to contact lenses including soft and hard types, especially to technology of a contact lens equipped with a lens-positioning function in the circumferential direction in a worn state of the lens.

A contact lens sometimes requires a lens-positioning function in the circumferential direction in a worn state when it has an optical part for correcting astigmatism or a bifocal optical part for correcting presbyopia and the like. For example, a toric lens used to correct astigmatism is required to have an advanced and stable alignment of relative positions between the astigmatism axis of the eyeball and the cylindrical axis of the lens. Also, as to multifocal lenses for near and far vision used for correcting presbyopia or the like for example, those designed with uneven distribution of diopter power in the circumferential direction around the optical center or the like are also required to have the lens-positioning function in the circumferential direction.

As conventional methods of positioning a contact lens in the circumferential direction in a worn state, the "truncation method" described in Japanese Unexamined Utility Model Publication No. JP-U-48-013048 (Patent Document 1), the "prism ballast method" described in Japanese Unexamined Patent Publication No. JP-A-11-258553 (Patent Document 2), and the "double thin method" described in Japanese Unexamined Patent Publication No. JP-A-8-304745 (Patent Document 3) are widely known. In addition, the "periballast method" has recently been proposed in the specification of U.S. Patent No.5,100,225 (Patent Document 4).

However, the "truncation method" described in Patent Document 1 is used to position a contact lens in the circumferential direction by making the lower outer periphery of the lens in a linear form in the chordwise direction to be supported by the lower eyelid, which posed a problem of uncomfortable feeling of wearing since the lower eyelid is irritated by both edges of the linear portion along the lower outer periphery of the lens abutting thereto, and it is rather hard to adopt this method in reality.

Also, the "prism ballast method" described in Patent Document 2 is used to position the contact lens in the circumferential direction using gravitational force by means of setting a prism for the entire lens to make it thicker toward the bottom, which posed a risk of deteriorated visibility caused by an adverse effect of the prism on the optical part of the lens in addition to uncomfortable feeling of wearing due to the thicker bottom end of the lens due to the prism therein.

Therefore, the tendency in recent years has been to adopt the "slab-off method" described in Patent Document 3 and the "periballast method" described in Patent Document 4. However, it has yet been difficult to realistically satisfy the requirements for the positioning performance in the circumferential direction and for wearing comfort of the contact lens at the same time even with the "slab-off method" or the "periballast method."

In other words, the "slab-off method" described in Patent Document 3 is used to position the contact lens in the circumferential direction by means of providing a thin portion in the lens toward the top and bottom ends and using the effect of having the lens tightly held by the eyelid as well as the effect of palpebral pressure on the top and bottom slopes thereof. Also, the "periballast method" described in Patent Document 4 is used to position the contact lens in the circumferential direction by means of forming a pair of thick portions on the left and right peripheries of the lens at locations biased downward and utilizing the weight balance thereof.

Then, in order to effectively obtain the positioning effect in the circumferential direction using the palpebral pressure in the former "slab-off method," the tapering gradients in the upper and lower portions of the lens need to be large enough. Also, in order to effectively obtain the positioning effect in the circumferential direction using the weight balance in the latter "periballast method," the pair of thick portions provided in the left and right peripheries of the lens at locations biased downward need to have a larger thickness gradient with more weight.

Therefore, using either "the slab-off method" or the "periballast method," there was a problem of easily deteriorating the wearing feeling due to the increased thickness gradient in the peripheral part of the lens in an attempt to obtain enough positioning effect in the circumferential direction.

In addition, in manufacturing a contact lens either by molding or machining, when a forming mold or a lens material is machined by a tool bit, there was a risk of interference by the rear side of the tool bit blade with the machined surface due to increased gradient thereof, or compromised precision of the machined surface due to difficulties in following the contour by a NC servo motor. Furthermore, even by increasing the front clearance angle of the tool bit or making the bit configuration conflict-free to avoid interference, there was a problem of decreasing rigidity of the tool bit resulting in extreme deterioration of the durability thereof.

Patent Document 1: JP-U-48-013048
Patent Document 2: JP-A-11-258553
Patent Document 3: JP-A-8-304745
Patent Document 4: U.S. Patent No.5,100,225

EP 2 278 387 discloses a contact lens comprising an optical portion is formed on front and rear surfaces devoid of a biased gravity center resulting from creating a prism.

US 2004/075807 discloses ophthalmic contact lenses having junctionless three dimensional surfaces.

WO 2004/010204 discloses contact lenses which incorporate a coaxial stabilization zone to stabilize the orientation of the lens relative to the eye

The present invention was made against the background described above, and the problem to be solved is to provide a contact lens with a novel structure that can more highly achieve both good wearing feeling and excellent positioning effect in the circumferential direction while providing a manufacturing method thereof.

According to aspects of the present invention, there are provided a contact lens and a manufacturing method of contact lens in accordance with the appended claims.

In order to solve the above problem, one aspect of the present invention provides a contact lens having a convex lens front surface and a concave lens rear surface while being provided with an optical part in its center portion and a peripheral part around the optical part, the contact lens being characterized in that: the peripheral part is provided with at least one thick portion and at least one thin portion away from each other in a circumferential direction which exhibit a positioning effect in the circumferential direction in a worn state; in a changing region provided between the thick and thin portions in the peripheral part where a thickness dimension of the lens changes in the circumferential direction, the lens front surface is given a front thickness change so as to get closer to the lens rear surface from the thick portion toward the thin portion in the circumferential direction, while the lens rear surface is given a rear thickness change so as to get closer to the lens front surface from the thick portion toward the thin portion in the circumferential direction.

In the contact lens with the structure according to the present invention, a thickness change is given to each of the front and rear surfaces in its peripheral part, and thick and thin portions in the peripheral part are formed by cooperation between the front and rear surfaces. This enables to make the rate of change of the lens thickness larger while minimizing the gradient of thickness change to be made to each of the front and rear surfaces. Therefore, it becomes possible to obtain excellent positioning performance in the circumferential direction by means of setting the rate of change of the lens thickness large enough while avoiding interference of the tool bit with the machined surface. In addition, the pressure of the lens can be shared between the eyeball and the eyelid as opposed to the case where the thickness gradient is given only to one of the surfaces, thus enabling to enhance the wearing comfort of the lens.

Also, the present invention relating to a contact lens can optionally adopt any of the following aspects in combination as appropriate:

That is, the contact lens relating to the present invention can adopt an aspect wherein both the thick and thin portions in the peripheral part are formed in a given length in the circumferential direction as a constant thickness region with no thickness change in the circumferential direction either on the lens front surface or on the lens rear surface.

Using the contact lens of the present aspect makes it possible to set the relative difference of mass and weight even larger between the thick portion and the thin portion by means of forming each portion in a given length in the circumferential direction with a constant thickness dimension.

Also, the contact lens relating to the present invention can adopt an aspect wherein both the front thickness change and the rear thickness change in the changing region of the peripheral part are set by a smooth surface with no step in the circumferential direction on the lens front surface and the lens rear surface, respectively.

In the contact lens of the present aspect, in a worn state, further reduction in the stimulus to the cornea, the eyelid or the like can be achieved in the changing region of the thickness on the lens front and rear surfaces. In the present aspect, the front and rear thickness changes in the peripheral part are preferably set by a smooth surface with no inflection point that would make the slope angle discontinuous.

For example, an aspect can be more favorably employed wherein the lens front surface and the lens rear surface in the changing region are set by a surface configuration that is expressed by a continuous function equation in the circumferential direction. By adopting the surface configuration represented by the continuous function equation, design of the front and rear surfaces of the lens that change thickness in the circumferential direction is rendered easier, while enabling to make the manufacturing easier such as machining over the mold or the lens surface by the NC control. As specific examples of continuous function equations, a linear function and a quadratic or higher function equation as well as conic curve and trigonometric function equations are adoptable.

Furthermore, the contact lens related to the present invention can adopt an aspect wherein on the lens front surface and the lens rear surface in the changing region, respective maximum values of rates of front and rear thickness changes represented by a ratio of an amount of the thickness change relative to a circumferential length are both set at no more than an overall rate of thickness change in the changing region expressed by a following equation:

$$\text{overall rate of thickness change in the changing region} = (Tb - Ta) / \theta_{a\text{-}b}$$

where Ta is a thickness dimension of the thin portion, Tb is a thickness dimension of the thick portion, and $\theta_{a-b}$ is a central angle of the changing region corresponding to the circumferential length of the changing region.

In the contact lens of the present aspect, each rate of change of the front and rear surfaces of the lens in the changing region is set so as not to exceed the rate of change of the overall changing region. That is, the change in thickness in the changing region in the circumferential direction is shared between the front and rear thickness changes of the lens, respectively. Therefore, drastic change in the thickness between the thick portion and the thin portion is restricted, thus enhancing the wearing comfort of the contact lens for the wearer.

Also, in the contact lens of the present aspect, an aspect can be preferably adopted wherein the thickness change in the circumferential direction in the changing region is shared between the lens front and rear surfaces at a constant ratio entirely across the changing region by means of setting the rates of front and rear thickness changes in the lens front and rear surfaces respectively at a constant ratio relative to each other.

In the contact lens of the present aspect, since the rate of the amount of the lens front and rear thickness changes per unit length in the circumferential direction is kept constant for the entire changing region where the thickness of the lens changes, further improvements can be made to the wearing feeling by equalizing the working pressure of the lens front and rear surfaces against the eyelid or the cornea.

In the present aspect, on the lens front and rear surfaces, each of the rates of front and rear thickness changes expressed by the ratio of the amount of thickness change relative to the circumferential length is preferably set at a constant ratio relative to each other in each corresponding area in the changing region. Also, in the present aspect, it is desirable to set the difference in the rate of thickness change between the front and rear surfaces of the lens within the range of not more than $0.50 \times 10^{-2}$ mm/angle, or to set it such that the rate of the one is within the range of five times that of the other.

Also, in the present aspect, a difference between the rates of front and rear thickness changes in the lens front and rear surfaces respectively is preferably set at zero so that the thickness change in the circumferential direction in the changing region is shared between the lens front and rear surfaces at an equal ratio to each other. This makes easier the design and manufacture of the changing region of the thickness on the front and rear surface of the lens and allows the enhancement of wearing feeling due to the distribution of lens pressure against the eyelid and the cornea to be achieved even more easily and more effectively.

Furthermore, the contact lens relating to the present invention can adopt an aspect wherein the optical part is formed with the front and rear surfaces that have no deviation of a center of gravity due to a prism setting. Using the contact lens of the present aspect makes it possible to obtain excellent optical properties at the optical part as well by having the positioning function in the circumferential direction according to the present invention fully exhibit its effects in the peripheral part.

Also, in the contact lens relating to the present invention, it is desirable to set specific values such as each thickness dimension of the thick and thin portions of the lens and the difference thereof as well as the rate of thickness change in the circumferential direction taking into account not only the physical information on dimensions such as DIA and CT of the lens, distinction between a hard contact lens and a soft contact lens and the type of lens materials or the like, but also the palpebral pressure and cornea configuration, the tear volume, and the lens stability on the cornea of the lens wearer or the like on an individual basis. Here, in terms of favorably obtaining the stability in the circumferential direction and the wearing comfort in a worn state of the lens, the design values described below can generally be adopted favorably.

That is, the contact lens relating to the present invention can adopt an aspect wherein a difference between the thickness dimensions of the thick portion and the thin portion is set within a range of 0.10 mm to 0.40 mm. The thickness dimension at each portion can be defined as a thickness dimension in the normal direction on the lens rear surface.

Also, the contact lens relating to the present invention can adopt an aspect wherein the thickness dimension of the thick portion is set within a range of 0.20 mm to 0.50 mm.

Also, the contact lens relating to the present invention can adopt an aspect wherein the thickness dimension of the thin portion is set within a range of 0.04 mm to 0.20 mm.

Also, the contact lens relating to the present invention can adopt an aspect wherein a maximum value of the rate of the thickness change in the circumferential direction in the changing region is set at not less than $0.40 \times 10^{-2}$ mm/angle around a central axis of the lens.

Also, the contact lens relating to the present invention adopts an aspect wherein the at least one thick portion comprises a pair of thick portions provided on left and right sides of the lens in the worn state, and the at least one thin portion comprises a pair of thin portions provided on upper and lower sides of the lens in the worn state, in order to more effectively obtain the positioning action in the circumferential direction in the thick and thin portions in a worn state..

Meanwhile, one aspect of the present invention related to the contact lens manufacturing method provides a manufacturing method of a contact lens having a convex lens front surface and a concave lens rear surface while being provided with an optical part in its center portion and a peripheral part around the optical part, wherein the peripheral part is provided with at least one thick portion and at least one thin portion away from each other in a circumferential direction which exhibit a positioning effect in the circumferential direction in a worn state, and a changing region is provided between the thick and thin portions in the peripheral part where a thickness dimension of the lens changes in the circumferential direction, the method being characterized by: specifying each slope configuration in the circumferential direction of the changing region on the lens front and rear surfaces; setting each thickness dimension of the thick and thin portions by concomitantly considering the slope configurations in the circumferential direction on the lens front and rear surfaces so as to determine front and rear surface configurations of the peripheral part; and then manufacturing the lens using the peripheral part provided with the front and rear surface configurations.

According to the method of the present invention described above, it is now possible to favorably manufacture a contact les with a novel structure that can highly achieve both good wearing feeling and excellent positioning effect in the circumferential direction where thickness change is given to each of the front and rear surfaces of the contact lens in the peripheral part and the thin and thick portions therein are formed by cooperation between the front and rear surfaces.

According to the present invention, a contact lens with a novel structure can be achieved, wherein thickness change is given to each of the front and rear surfaces of the contact lens in the peripheral part and the thin and thick portions are formed therein by cooperation between the thickness changes.

Then, in the contact lens with the structure described above, the difference between thickness dimensions of the thin portion and the thick portion can be set large while avoiding a steep slope angle by restricting the rates of front and rear thickness changes of the lens by means of sharing the thickness dimension difference in the peripheral part between the front and rear surfaces of the lens. As a result, it is now possible to secure processing precision such as that in machining and manufacturability of the forming mold or lens materials and to realize good wearing feeling by minimizing foreign-body sensation caused by oppressive feeling against the eyelid and the cornea in a worn state while obtaining high positioning stability in the circumferential direction taking advantage of the weight balance between the thin and thick portions as well as the effect of the palpebral pressure against the peripheral part of the lens or the like.

FIG. 1 is a front view of a contact lens as a first embodiment of the present invention.

FIG. 2 is a cross section view taken along line 2-2 of FIG. 1.

FIG. 3 is a cross section view taken along line 3-3 of FIG. 1.

FIG. 4A is a view suitable for explaining a thin portion shown in FIG. 2 and a thick portion shown in FIG. 3 overlapped on the same geometric central axis of the lens, whereas FIG. 4B is an enlarged view of a principle part of FIG. 4A.

FIG. 5 is a view suitable for explaining a thickness change at a center of a peripheral part in a radial direction of the contact lens shown in FIG. 1.

FIG. 6 is a cross section view showing forming molds for manufacturing the contact lens shown in FIG. 1.

FIG. 7 is a view suitable for explaining the contact lens shown in FIG. 1 in a worn state.

FIG. 8 is a cross section view of a contact lens as a second embodiment of the present invention corresponding to FIG. 2.

FIG. 9 is a cross section view of the contact lens as the second embodiment of the present invention corresponding to FIG. 3.

FIG. 10 is a view suitable for explaining the contact lens as the second embodiment of the present invention corresponding to FIG. 4.

FIG. 11 is a view suitable for explaining a thickness change in a peripheral part of the contact lens as the second embodiment of the present invention.

FIG. 12 is a front view of a contact lens as a third embodiment of the present invention.

FIG. 13 is a cross section view taken along line 13-13 of FIG. 12.

FIG. 14 is a cross section view taken along line 14-14 of FIG. 12.

FIG. 15 is a view suitable for explaining thin and thick portions shown in FIG. 13 and a central portion of a changing region in a circumferential direction shown in FIG. 14 overlapped on a same geometric central axis of the lens.

FIG. 16 is a view suitable for explaining a thickness change at a center of a peripheral part in a radial direction of the contact lens shown in FIG. 12.

FIG. 17 is a cross section view of a contact lens as a fourth embodiment of the present invention corresponding to FIG. 13.

FIG. 18 is a cross section view of the contact lens as the fourth embodiment of the present invention corresponding to FIG. 14.

FIG. 19 is a view suitable for explaining the contact lens as the fourth embodiment of the present invention corresponding to FIG. 15.

FIG. 20 is a view suitable for explaining a thickness change at a center of a peripheral part in a radial direction of the contact lens as the fourth embodiment of the present invention.

In order to further discuss the specifics of the present invention, embodiments thereof will be described below in reference to the drawings.

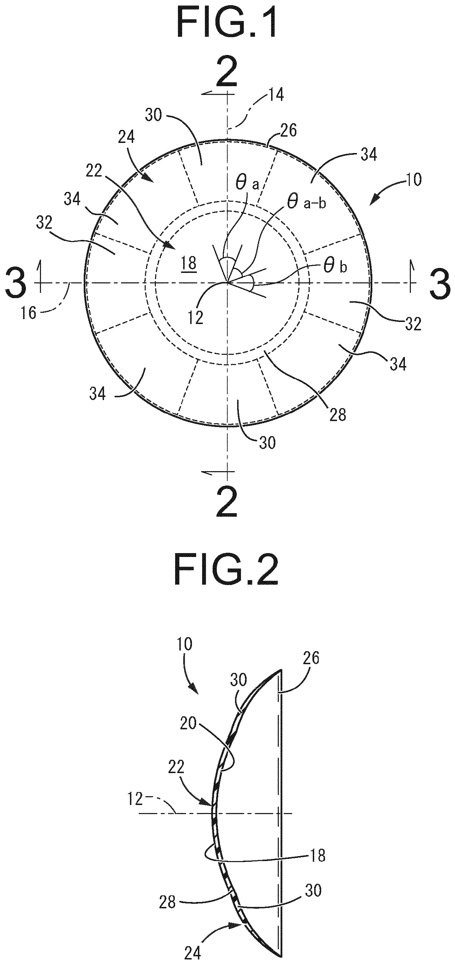

First, FIGS.1 to 3 show a contact lens 10 with a structure according to the present invention. The contact lens 10 is in an approximate shape of a partial spherical shell as a whole, which is used, as is well known, by being overlaid on the corneal surface of the eyeball. The present invention is applicable to either a soft type or a hard type contact lens. As a soft type contact lens, the material is not limited to any specific one, and for example water content materials including those conventionally known as PHEMA (polyhydroxyethyl methacrylate) and PVP (polyvinylpyrrolidone) as well as materials with no water content such as acrylic rubber and silicone can be employed. Especially, the present invention is also applicable to a hard contact lens made of gas permeable materials (RGP lens) such as PMMA (polymethyl methacrylate) and SiMA/MMA polymer and the like.

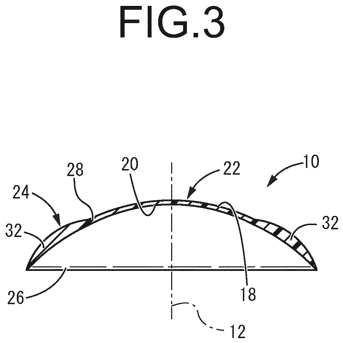

More specifically, the contact lens 10 of the present embodiment has the peripheral part made linearly symmetrical across a vertical radial line 14 that passes through a geometric central axis 12 of the lens, which is the central axis of the lens's outline, and this vertical radial line 14 is set approximately coincident with the vertical direction in a worn state of the lens. Then, a horizontal radial line 16, which is a radial line perpendicular to the vertical radial line 14 passing through the geometric central axis 12 of the lens, is set approximately coincident with the horizontal direction in a worn state of the lens. The radial cross sections of FIGS. 3 and 2 show the state of $\theta = 90$ degrees in the circumferential direction around the geometric central axis 12 of the lens (FIG. 3) and the state of $\theta = 180$ degrees in the circumferential direction around the same (FIG. 2), respectively, on the horizontal radial line 16 forming the symmetrical axis, on the basis of the right side of FIG. 1 ($\theta = 0$ degree).

Furthermore, the contact lens 10 of the present embodiment is made in a circular shape in the front view as shown in FIG. 1, having a lens front surface 18 in an approximate shape of a convex sphere and a lens rear surface 20 in an approximate shape of a concave sphere as shown in FIGS. 2 and 3.

Also, such contact lens 10 is structurally composed of an optical part 22 extending around the center in an approximate shape of a circle in front view, a peripheral part 24 extending in a near annular shape in front view to surround the optical part 22, and an edge portion 26 located along the outermost peripheral edge of the lens around the peripheral part 24 connecting the front and rear surfaces of the lens to each other.

The optical part 22 has an optical surface based on a spherical or aspherical configuration with an appropriate curvature radius given to the lens front and rear surfaces 18, 20 so as to achieve a monofocal or multifocal lens power for example, as part of optical properties required to correct visual functions and the like. Especially in a contact lens for correcting astigmatism to which the present invention can be favorably applied, cylindrical lens surfaces are combined so that an appropriate cylindrical power is expressed at an appropriate angle of cylindrical axis at least on one of the lens front surface 18 and the lens rear surface 20 of the optical part 22 in order to provide the optical part 22 with optical properties required for correcting astigmatism.

Just to give a specific example, one of the lens front surface 18 and the lens rear surface 20 of the optical part 22 is made in a spherical shape with a curvature radius that takes into account the corneal curvature radius and the like, while the other is made in a spherical shape with a curvature radius that meets the required spherical lens power. In addition, in one of the lens front and rear surfaces 18, 20, a toric surface with an axis in a specific direction is formed. Then, by having the lens front surface 18 and the lens rear surface 20 formed on the geometric central axis 12 of the lens, the optical part 22 is made into a toric lens having both the required spherical lens power and cylindrical lens power. However, the optical part 22 of the present invention can also be made, for example, as a bifocal lens with two foci, a multifocal lens that provides three or more foci, or a progressive lens with continuously changing foci.

In the optical part 22 of the present embodiment, the geometric central axis thereof is made to coincide with the geometric central axis 12 of the lens, while the center of gravity of the optical part 22 is located on the geometric central axis thereof by having the thickness dimensions of corresponding portions of the optical part 22 made approximately equal to each other at symmetrical positions across the geometric central axis 12 of the lens. That is, in the present embodiment the optical part 22 of the contact lens 10 is not provided with a prism for the purpose of shifting the center of gravity downward in order to stabilize the position of the lens in the circumferential direction.

Meanwhile, the peripheral part 24 is preferably formed within the range of 0.1 mm to 2.0 mm from the outer peripheral edge of the lens in radial direction of the contact lens 10, and more preferably within the range of 0.3 mm to 1.7 mm from the same. Most likely, if the peripheral part 24 is formed within the range of less than 0.1 mm from the outer peripheral edge of the lens in radial direction thereof, there is a risk of reducing the positioning effect in the circumferential direction by the peripheral part 24 as described later, whereas, if the peripheral part 24 is formed in the range of more than 2.0 mm from the same in the lens radial direction, there is another risk of not being able to secure a forming region of the optical part 22 large enough.

The outer peripheral edge of the optical part 22 and the inner peripheral edge of the peripheral part 24 can be formed in direct contact with each other, but in the present embodiment, a transitional region 28 is provided between the two extending in an annular shape with a given width in front view. Due to this transitional region 28, the optical part 22 and the peripheral part 24 are connected to each other with a surface configuration that continues smoothly with no inflection point in the lens radial direction on the lens front surface 18 and the lens rear surface 20.

Now, since the peripheral part 24 does not give any impact on the optical properties of the contact lens 10, the configuration thereof can be set freely without being constrained by the required optical properties. And, the lens front surface 18 and the lens rear surface 20 of the peripheral part 24 are configured so as to let the contact lens 10 favorably achieve the stability of lens positioning and the wearing comfort in a worn state.

First, as to the configuration of the lens front and rear surfaces 18, 20 of the peripheral part 24 in radial cross section of the lens, considering the design and manufacturing workability or the like as well as fitting to the cornea in a worn state and lacrimal fluid exchange performance of the lens or the like, quadratic and conic curve configurations, for example, can favorably be adopted other than a circular arc configuration. In order to achieve even better wearing comfort, it is desirable that each of the lens front and rear surfaces 18, 20 of the peripheral part 24 be connected to the transitional region 28 through the optical part 22 on the inner peripheral side of the peripheral part 24 and to the edge portion 26 on the outer peripheral side thereof in a smooth configuration with no inflection point.

Next, the configuration of the lens front and rear surfaces 18, 20 of the peripheral part 24 in a circumferential cross section of the lens is set by a slope where the wall thickness of the peripheral part 24 varies in the circumferential direction.

More specifically, in the peripheral part 24, a pair of thin portions 30, 30 are formed in the upper and lower regions positioned opposite to each other on the vertical radial line 14, while a pair of thick portions 32, 32 are formed in the left and right regions positioned opposite to each other on the horizontal radial line 16. The pair of thick portions 32, 32 are made relatively thicker than the pair of thin portions 30, 30. Also, the pair of thick portions 32, 32 positioned on the left and right sides of the lens are made symmetrical to each other across the vertical radial line 14, which are formed in a given length extending up and down in the circumferential direction straddling the horizontal radial line 16.

Also, in the present embodiment, the pair of thin portions 30, 30 located on the upper and lower sides of the lens are made symmetrical to each other across the horizontal radial line 16 to be formed in a given length extending to the left and right in the circumferential direction straddling the vertical radial line 14. Especially in the present embodiment, the pair of thin portions 30, 30 extend to the left and right from the vertical radial line 14 in equal dimensions to make a symmetrical form across the vertical radial line 14, while the pair of thick portions 32, 32 likewise extend up and down from the horizontal radial line 16 in equal dimensions to make a symmetrical form across the horizontal radial line 16. Then, between each thin portion 30 and each thick portion 32, a gap is provided in a given dimension in the circumferential direction.

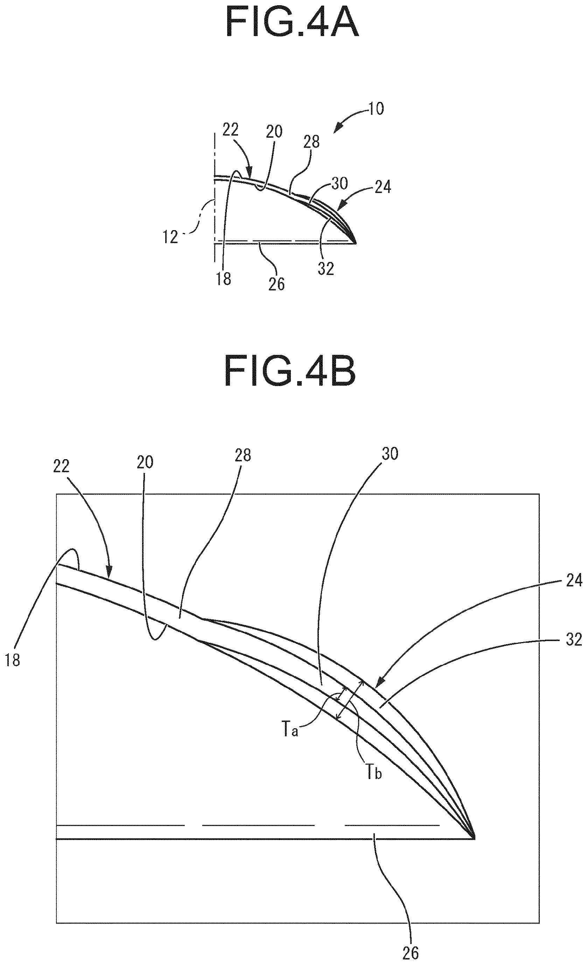

Also, as shown in FIGS. 2 and 3, both in the thin portion 30 and the thick portion 32 of the present embodiment, the lens front surface 18 is made in an approximate shape of a curved convex arc as a whole, while the lens rear surface 20 is made in an approximate shape of a curved concave arc as a whole in the radial cross section. On the lens front surface 18 and the lens rear surface 20 of the peripheral part 24, a concave portion and a convex portion can partially be provided, respectively, depending on the curvature changes in the radial direction. Especially when the thin portion 30 and the thick portion 32 are overlapped on top of each other on the geometric central axis 12 of the lens as shown in FIGS. 4A and 4B, the thin portion 30 and the thick portion 32 are shifted from each other in the lens thickness direction both on the lens front surface 18 and the lens rear surface 20. That is, on the lens front surface 18, the thin portion 30 is biased more to the side of the lens rear surface 20 than the thick portion 32, while on the lens rear surface 20, the thin portion 30 is biased more to the side of the lens front surface 18 than the thick portion 32. As a result, the difference between the thickness dimensions of the thin portion 30 and the thick portion 32 is made by cooperation between the lens front surface 18 and the lens rear surface 20.

Both in the thin portion 30 and the thick portion 32 of the present embodiment, the lens front surface 18 is made to be biased outward in a swollen manner as a whole in the radial cross section as compared to the curved surface on the extension of the optical part 22, while the lens rear surface 20 is made to be biased inward in a depressed manner as a whole in the radial cross section as compared to the same. Also, the thin portion 30 is made in a thinner configuration than the thick portion 32 from each of the lens front and rear surfaces 18, 20. The edge portion 26 is made in an annular shape extending on a plane perpendicular to the geometric central axis 12 of the lens all around the circumference of the thin portion 30 and the thick portion 32 including their outer peripheries.

In addition, in the present embodiment, the thin portion 30 and the thick portion 32 in the inner peripheral edge are both made in the same thickness dimension as the outer peripheral edge of the optical part 22 via the transitional region 28, while being made in the same thickness dimension as the inner peripheral edge of the edge portion 26 in the outer peripheral edge. Also, the thickness dimension of the thin portion 30 is made the thickest along the inner periphery at approximately equal to or smaller than the thickness dimension of the outer peripheral edge of the optical part 22. Meanwhile, the thickness dimension of the thick portion 32 is made the thickest in the middle in radial direction at more than the thickness dimension of the outer peripheral edge of the optical part 22.

Furthermore, in the present embodiment, each of the thin portion 30 and the thick portion 32 has no thickness change in the circumferential direction either on the lens front surface 18 or on the lens rear surface 20. That is, the thin portion 30 and the thick portion 32 are each formed as a constant thickness region in a given length in the circumferential direction. The thin portion 30 and the thick portion 32 are not limited to this configuration and the thickness thereof can be varied in the circumferential direction.

Moreover, the areas between each pair of thin portions 30 and the thick portions 32 of the peripheral part 24 are each made as a changing region 34 where the thickness dimension of the lens gradually changes in the circumferential direction between the thin portion 30 and thick portion 32.

In this changing region 34, the lens front surface 18 and the lens rear surface 20 each comprise a slope that gradually slopes in the lens thickness direction along the circumference. In addition, this thickness change along the slope does not have any step in the circumferential direction so that the lens front and rear surfaces 18, 20 in the changing region 34 are made smooth across the surface. This allows each lens front surface 18 of the thin portion 30 and the thick portion 32 located at different positions relative to each other in the lens thickness direction to be connected smoothly on the lens front surface 18 of the changing region 34, and each lens rear surface 20 of the thin portion 30 and the thick portion 32 located at different positions relative to each other in the lens thickness direction to be connected smoothly on the lens rear surface 20 of the changing region 34.

Here, the lens front and rear surfaces 18, 20 in the changing region 34 are sloping in the direction of getting closer to each other from the thick portion 32 toward the thin portion 30 in the circumferential direction. Specific inclination angle and configuration are not particularly limited, but it is desirable that the aspect of the inclination angle of the changing region in the circumferential direction be expressed by an appropriate function. More specifically, it can be formed not only with a constant inclination angle according to a linear function but also by a spline function that provides the thin portion 30 and thick portion 32 with a smooth connection or trigonometric functions such as sin and sin2, for example.

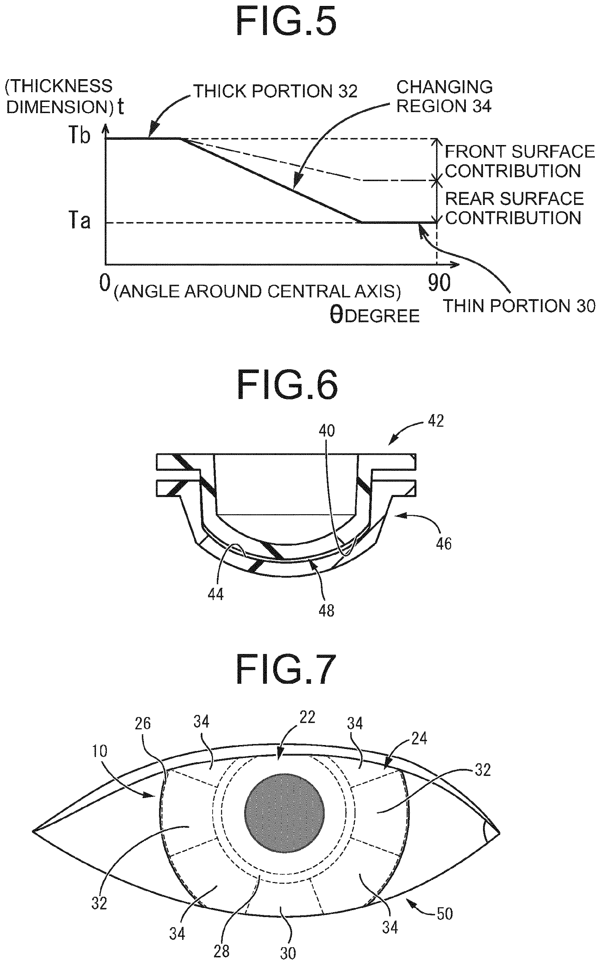

As one example, FIG. 5 shows a case where the surface configuration in the circumferential direction of the lens front surface 18 and the lens rear surface 20 of the peripheral part 24, that is the thickness change, is set by a linear function, which is one of the continuous function equations. Here, the thickness dimension: t of the peripheral part 24 represents the distance between the opposing faces of the lens front surface 18 and the lens rear surface 20 in the normal direction at the midpoint of the peripheral part 24 in radial direction. Especially, FIG. 5 shows a region starting from the origin on the horizontal radial line 16 all the way to the vertical radial line 14 around the geometric central axis 12 of the lens at the central angle $\theta$ = 90 degrees, which represents changes of the thickness dimension: t in the circumferential direction at the center of the peripheral part 24 in radial direction.

The thickness dimension: Ta of the thin portion 30 (see FIG. 4B) and the thickness dimension: Tb of the thick portion 32 (see FIG. 4B) are to be set according to the material of the contact lens 10 and the lens power of the optical part 22, which are not particularly limited.

For example, the maximum value of the thickness dimension: Ta of the thin portion 30 is preferably set within the range of 0.04 mm $\leq$ Ta $\leq$ 0.20 mm, and more preferably within the range of 0.06 mm $\leq$ Ta $\leq$ 0.15 mm. This enables to prevent breakage of the lens due to damage to the thin portion 30 or the like while advantageously achieving the reduction in foreign-body sensation during insertion of the thin portion 30 under the eyelid and enhancement of the strength as well as good oxygen permeability of the lens.

Also, the maximum value of the thickness dimension: Tb of the thick portion 32 is preferably set within the range of 0.20 mm $\leq$ Tb $\leq$ 0.50 mm, and more preferably within the range of 0.25 mm $\leq$ Tb $\leq$ 0.40 mm. This enables to ensure the push-out effect of the upper eyelid at the time of blinking and the gravitational balance effect on the thick portions 32, 32 more effectively to improve the stability of the lens positioning in the circumferential direction in a worn state, while enhancing the wearing comfort by preventing excessive contact of the eyelid against the thick portion 32. In addition, in the same token, the difference between the thickness dimension: Ta of the thin portion 30 and the thickness dimension: Tb of the thick portion 32 is preferably set within the range of 0.10 mm $\leq$ (Tb - Ta) $\leq$ 0.40 mm, and more preferably within the range of 0.15 mm $\leq$ (Tb - Ta) $\leq$ 0.30 mm.

Also, the thin portion 30 and the thick portion 32 are preferably provided with the angles $\theta_a$ and $\theta_b$ around the geometric central axis 12 of the lens (see FIG. 1) extending with a given cross section within the range of 0 degree $\leq \theta_a \leq$ 80 degrees and 0 degree $\leq \theta_b \leq$ 80 degrees, respectively, and more preferably within the range of 30 degrees $\leq \theta_a \leq$ 60 degrees and 30 degrees $\leq \theta_b \leq$ 60 degrees, respectively. This enables to improve the stability of lens positioning in the circumferential direction in a worn state and further enhance the wearing comfort. For the same reasons, the changing region 34 provided between the thin portion 30 and the thick portion 32 preferably have the central angle corresponding to the circumferential length of the changing region 34, that is, the angle $\theta_{a-b}$ around the geometric central axis 12 of the lens (see FIG. 1) set within the range of 20 degrees $\leq \theta_{a-b} \leq$ 90 degrees, and more preferably within the range of 30 degrees $\leq \theta_{a-b} \leq$ 60 degrees.

In addition, in the changing region 34, the rate of thickness change (Tb-Ta) $/\theta_{a-b}$ expressed by the ratio of the amount of thickness change to the circumferential length is preferably set within the range of 0.30 $\times$ 10$^{-2}$ mm /angle $\leq$ (Tb - Ta) $/\theta_{a-b} \leq$ 1.0 $\times$ 10$^{-2}$ mm /angle, and the maximum value thereof is preferably made not less than 0.40 $\times$ 10$^{-2}$ mm /angle if the rate of thickness change varies along the circumference. Doing this way makes it possible to secure a large difference between the thickness dimensions of the thin portion 30 and the thick portion 32 to obtain the positioning action of the lens more effectively in the circumferential direction due to the gravitational balance and the lens push-out effect caused by eyelid pressure or the like.

Under these circumstances, the difference between the thickness dimensions of the thin portion 30 and the thick portion 32 is shared between the lens front and rear surfaces 18, 20 by applying a slope in the circumferential direction thereto in the changing region 34. That is, on the lens front surface 18 of the changing region 34, a front thickness change is given starting from the thick portion 32 toward the thin portion 30 getting closer to the lens rear surface 20 in the circumferential direction, while on the lens rear surface 20 of the changing region 34, a rear thickness change is given starting from the thick portion 32 toward the thin portion 30 getting closer to the lens front surface 18 in the circumferential direction. In other words, the rate of thickness change $(Tb - Ta) / \theta_{a-b}$ in the changing region described above is achieved by properly setting the inclination angle to be given to the lens front surface 18 and the lens rear surface 20, respectively, in the circumferential direction in the changing region 34.

More specifically, a rate of front thickness change expressed by a ratio of the amount of thickness change relative to the circumferential length ("front surface contribution" in FIG. 5) is set on the lens front surface 18, while a rate of rear thickness change expressed by a ratio of the amount of thickness change relative to the circumferential length ("rear surface contribution" in FIG. 5) is set on the lens rear surface 20. Then, a sum of these rates of front and rear thickness changes is made equal to the rate of thickness change $(Tb - Ta) / \theta_{a-b}$ set for the changing region 34. In other words, the maximum values of the rates of front and rear thickness changes are each set at the value that does not exceed the overall rate of thickness change $(Tb - Ta) / \theta_{a-b}$ in the changing region 34.

Then, it is possible to set the sharing ratio of the rate of thickness change set in the changing region 34 between the rates of front and rear thickness changes as appropriate in consideration for the degree of fitting to the cornea and the eyelid, the amount of thickness changes and materials of the lens and so forth. By the way, in the present embodiment, the thickness change in the peripheral part 24 is shared at a constant ratio between the rates of front and rear thickness changes across the entire changing region 34 as shown in FIGS. 4 and 5, and further the rate of front thickness change is made equal to the rate of rear thickness change, that is, the difference between them is set at zero. This allows the amount of thickness change in the changing region 34 in the circumferential direction to be shared by the sides of the lens front surface 18 and the lens rear surface 20 at a constant ratio across the entire changing region 34, and especially in the present embodiment where the rates of front and rear thickness changes are equal to each other, the amount of the thickness change in the circumferential direction can be shared equally by the lens front surface 18 and the lens rear surface 20.

According to the invention, the lens front and rear surfaces 18, 20 in the changing region 34 have the rates of front and rear thickness changes gradually reduced to zero at both ends in the circumferential direction connecting to the thin portion 30 and the thick portion 32. Accordingly, the lens front and rear surfaces 18, 20 of the thin portion 30 and the thick portion 32 are connected thereto with no inflection point such as an edge.

The contact lens 10 with the structure described above can be made by directly machining a block pre-formed by polymerization using appropriate materials, but in order to achieve high mass productivity and excellent quality stability, it is desirable to manufacture the lens by mold forming.

More specifically, as shown in FIG. 6, a method of molding the contact lens 10 provided with the intended lens front and rear surfaces 18, 20 is favorably adopted generally by the use of a male mold 42 having a mold surface 40 in an approximate shape of a convex sphere corresponding to the lens rear surface 20 and a female mold 46 having a mold surface 44 in an approximate shape of a concave sphere corresponding to the lens front surface 18 by means of polymerizing a prescribed monomer for polymerization within an almost tightly closed forming cavity 48 designed between the mold surfaces 40, 44 of the male and female molds 42, 46 by mold-matching these molds.

Under these circumstances, the mold surfaces 40, 44 of the male and female molds 42, 46 are provided with a configuration that gives the intended shape of the optical part 22 and the peripheral part 24, by which the optical part 22 is formed provided with prescribed spherical lens properties as well as cylindrical lens properties in the contact lens 10 to be manufactured, while the peripheral part 24 is formed with the prescribed thickness change in the circumferential direction as described above. The first step in this process is to specify each slope configuration of the changing region 34 in the circumferential direction on the lens front and rear surfaces 18, 20. At the same time, each thickness dimension is set for the thick portion 32 and the thin portion 30 by concomitantly considering the slope configurations in the circumferential direction of the lens front and rear surfaces 18, 20. This determines the configurations of the lens front and rear surfaces 18, 20 of the peripheral part 24. Since lens front and rear surfaces 18, 20 of the peripheral part 24 are each given a prescribed slope or the like at a location corresponding to each other, the male and female molds 42, 46 are equipped with a means for relative positioning in the circumferential direction to lock themselves to each other or the like.

The contact lens 10 with the structure described above is worn on the corneal surface of an eye 50 as shown in FIG. 7. In such a worn state, a pair of thick portions 32, 32 are located on the left and right sides, while a pair of thin portions 30, 30 are located on the upper and lower sides. Then, by the mass-balancing effect between the pair of thick portions 32, 32 located on the left and right sides, positioning of the contact lens 10 in the circumferential direction is achieved. Also, as a consequence of blinking of the eye and insertion of the lens under the eyelid, the palpebral pressure applied to the changing region 34 and thick portions 32, 32 of the contact lens 10 and the push-out force of the eyelid (sliding effect of the lens) exhibit a stabilizing action on the contact lens 10, by which it is adjusted to the prescribed position in the circumferential direction (as shown in FIG. 7 where the horizontal radial line 16 is kept horizontal). Especially in the present embodiment, since the pair of thick portions 32, 32 are formed on the left and right sides of the contact lens 10, the push-out force downward at the time of blinking can be transmitted to the left and right sides away from the geometric central axis 12 of the lens so that excellent stability in the circumferential direction can be achieved by the balance between the left and right push-out forces as well.

In addition, in the contact lens 10 with the structure described above, since the difference between thickness dimensions of the thin portion 30 and the thick portion 32 is shared by each slope of the lens front and rear surfaces 18, 20 of the changing region 34, it becomes possible to set the difference between thickness dimensions of the thin portion 30 and the thick portion 32 large enough while preventing each inclination angle of the lens front and rear surfaces 18, 20 from getting too steep. Therefore, it is now possible to effectively enjoy the lens positioning function in the circumferential direction made possible by setting the difference between thickness dimensions of the thin portion 30 and the thick portion 32 while reducing the pressure applied to the cornea and the eyelid as well as foreign-body sensation due to the inclination angle given to the lens front and rear surfaces 18, 20 of the changing region 34.

Also, since the thickness change of the changing region 34 in the circumferential direction is shared by the lens front and rear surfaces 18, 20 to reduce the inclination angle of the lens front surface 18, the risk of getting the upper eyelid caught by the lens front surface 18 at the time of blinking to inadvertently rotate the lens and impair the wearing comfort can also be reduced. Meanwhile, since the difference between thickness dimensions of the lower thin portion 30 and the pair of thick portions 32, 32 on the left and right sides is set large by cooperation between the slopes of the lens front and rear surfaces 18, 20, when the contact lens 10 is rotated excessively (over 30 or 60 degrees, for example), further rotation can be prevented more securely by the abutment of the changing region 34 and thick portions 32, 32 located below the horizontal radial line against the top edge of the lower eyelid.

Furthermore, the optical part 22 of the present embodiment has no local thick portion like a prism formed on the lens front surface 18 or the lens rear surface 20, and the position of its center of gravity is located on the geometric central axis 12 of the lens without being deviated in any direction. This allows us to favorably avoid problems such as an adverse optical effect caused by a prism.

The first embodiment of the present invention has been described in detail hereinabove, but it is just an example and the present invention is not to be interpreted in a manner limited by the specific description.

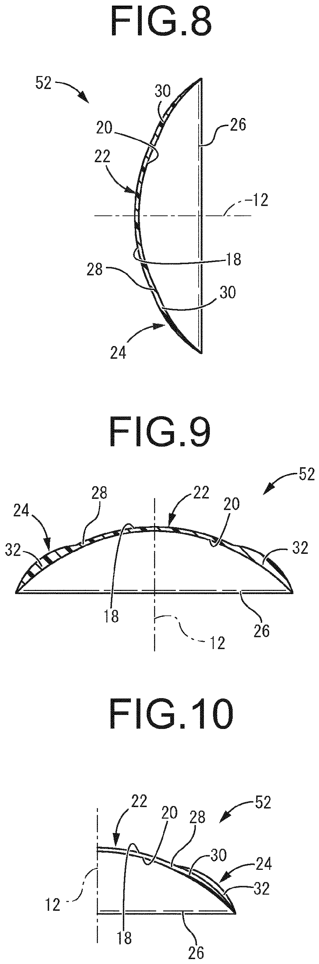

For example, the sharing ratio of the rate of thickness change to be set in the changing region 34 between the rates of front and rear thickness changes can be determined as appropriate as described above, and it is not limited to an aspect as exemplified in the first embodiment, where the rates of front and rear thickness changes are made equal so that the amount of front thickness change (front surface contribution) is set equal to the amount of rear thickness change (rear surface contribution) relative to the amount of thickness change of the changing region 34 (Tb - Ta). It is possible to set the front surface contribution relatively different from the rear surface contribution, and a specific aspect where the front surface contribution is set at double or more than double the rear surface contribution is shown as a second embodiment in FIGS. 8 to 11.

Since the front view of a contact lens 52 as a second embodiment is substantially the same as that of the contact lens 10 of the first embodiment, it is omitted in the drawings. Also, since FIGS. 8 to 11 of the second embodiment respectively correspond to FIGS. 2 to 5 of the first embodiment, detailed description will be omitted by assigning the same numerals to the corresponding components in each drawing.

Also the thickness change set in the peripheral part 24 can be made in such a way that the thick portion 32 and thin portion 30 are located apart from each other in the circumferential direction exhibiting a positioning effect in the circumferential direction based on the weight balance of the contact lens 10 (52) in a worn state, and not only the specific size and thickness dimension of the thick portion 32 and the thin portion 30 but also their number and position in the circumferential direction or the like are not limited to those of the aspect of the first embodiment described above. For example, in the contact lens 10 of the first embodiment, it is possible to improve the stability in the circumferential direction by means of biasing downward both the pair of thick portions 32, 32 provided on the left and right sides and setting the center of gravity thereof at a location diagonally downward from the vertical radial line to set the center of gravity below the geometric central axis 12, or by means of setting the center of gravity lower by making the lower thin portion 30 slightly thicker or circumferentially longer than the upper thin portion 30. When the distance between the thin portion 30 and the thick portion 32 in the peripheral part 24 in the circumferential direction is not set constant, the inclination angles of the front and lens rear surfaces 18, 20 in each of the changing regions 34 will be different from each other corresponding to the difference in the distances between the thin portion 30 and the thick portion 32 in the circumferential direction.

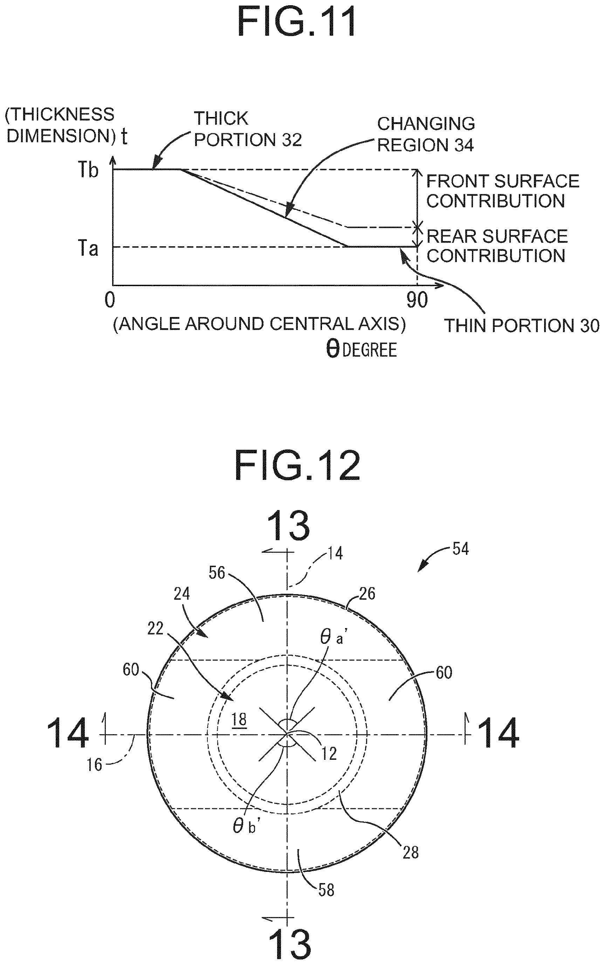

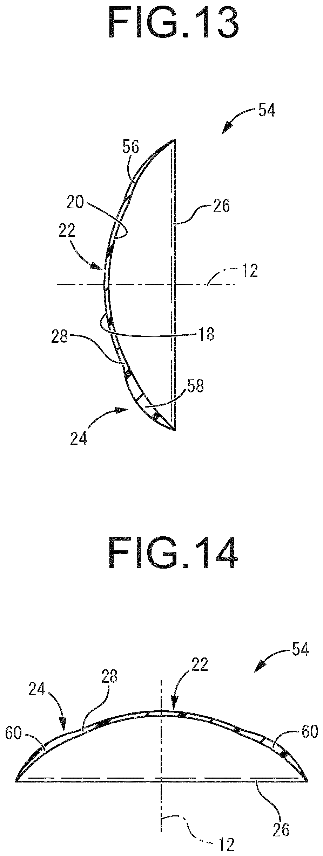

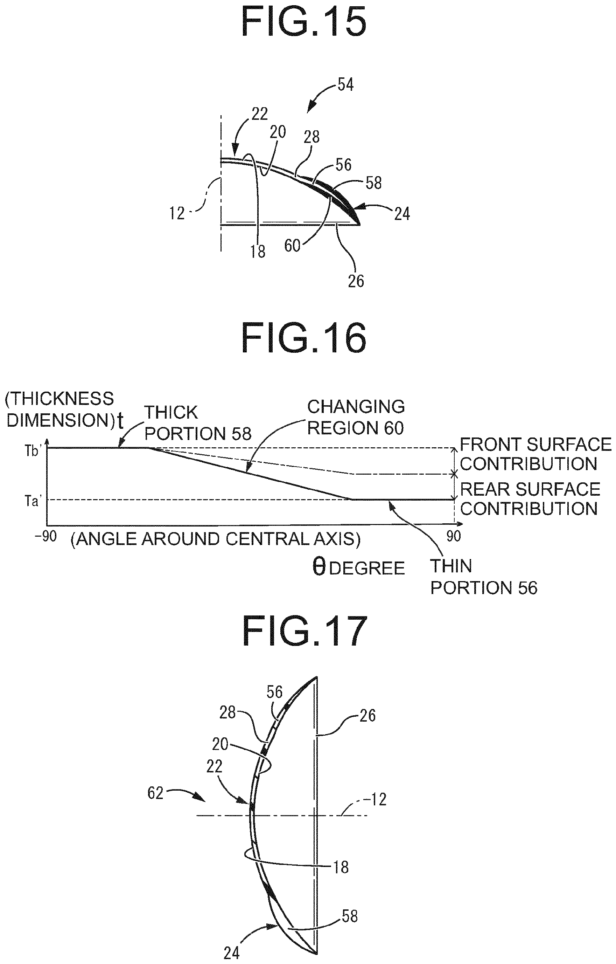

FIGS. 12 to 16 show a contact lens 54 as a third embodiment of the present invention having an aspect where the thin portion and the thick portion are provided one each in the peripheral part 24. These FIGS. 12 to 16 correspond to FIGS. 1 to 5 of the first embodiment, respectively, and the same numerals are assigned to the corresponding components. That is, a single thin portion 56 is provided in the contact lens 54 of the present embodiment at the top end thereof on the vertical radial line 14 in a worn state, while a single thick portion 58 is provided at the bottom end thereof. The thin portion 56 and the thick portion 58 are preferably extended to both sides in the circumferential direction in a given length straddling over the vertical radial line 14. In the present embodiment the border between the thin portion 56 and changing regions 60, 60 (described later) and the border between the thick portion 58 and the changing regions 60, 60 (described later) are both extending to the left and right (in horizontal directions in a worn state). This allows the thin portion 56 and the thick portion 58 to be each made in a segment configuration. FIG. 15 shows thickness change of the peripheral part 24 starting from the thin portion 56 up to the thick portion 58 by overlapping each cross section of the thin portion 56 and the thick portion 58 shown in FIG. 13 as well as the central cross section of the changing region 60 (described later) in the circumferential direction shown in FIG. 14. Also, FIG. 16 shows thickness change of the lens at the center of the peripheral part 24 in the radial direction within the range from $\theta$ = -90 degrees (down in vertical direction in a worn state) to $\theta$ = 90 degrees (up in vertical direction in a worn state).

Also, a pair of changing regions 60, 60 are provided on the left and right sides of the peripheral part 24. Such changing region 60 extends along the circumference in the length half or less than half the round, and as is the case with the first embodiment, rates of front and rear thickness changes are each set on the lens front surface 18 and the lens rear surface 20 in the changing region 60 so as to form a gradual inclination in the lens thickness direction from the end of the thick portion 58 to the end of the thin portion 56 in the circumferential direction.

In the present embodiment, the thin portion 56 and the thick portion 58 can extend with a given cross section in different lengths from each other along the circumference. Here, we assume that the central angles of the thin portion 56 and the thick portion 58 about the geometric central axis 12 relative to each circumferential length at the center of the peripheral part 24 in radial direction are $\theta_a$' and $\theta_b$', respectively (see FIG. 12). These angles $\theta_a$' and $\theta_b$' are preferably set within the range of 0 degree $\leq \theta_a$' $\leq$ 120 degrees and 20 degrees $\leq \theta_b$' $\leq$ 120 degrees, respectively. Also, as is the case with the first embodiment, the maximum value of the thickness dimension: Ta' of the thin portion 56 is preferably set within the range of 0.10 mm $\leq$ Ta' $\leq$ 0.20 mm, while the maximum value of the thickness dimension: Tb' of the thick portion 58 is preferably set within the range of 0.20 mm $\leq$ Tb' $\leq$ 0.50 mm. Then the changing regions 60, 60 are provided with an inclination preferably within the range of $0.30 \times 10^{-2}$ mm/angle to $1.0 \times 10^{-2}$ mm/angle so as to smoothly connect the thin portion 56 and the thick portion 58 in the circumferential direction on each of the lens front and rear surfaces 18, 20.

In the contact lens 54 of the present embodiment, lens positioning effect can be achieved in the circumferential direction based on the weight balance between the thin portion 56 and the thick portion 58 in a worn state, and due to the sharing of the difference between thickness dimensions of the thin portion 56 and the thick portion 58 by the slopes of the lens front and rear surfaces 18, 20 in the changing region 60, 60, the good wearing comfort and positioning effect in the circumferential direction can be achieved all at once.

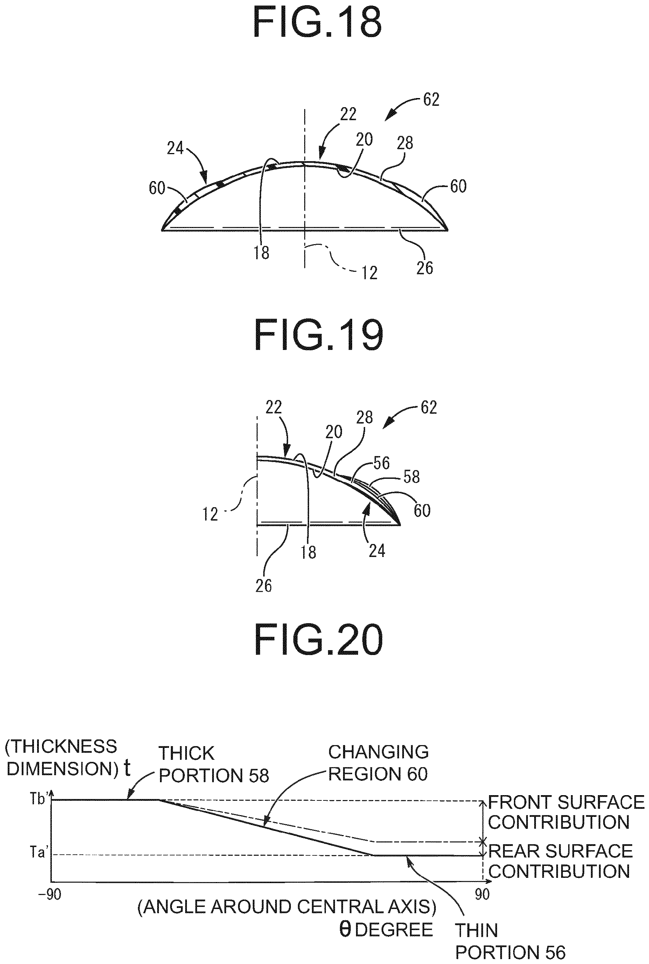

Even in the contact lens provided with one each of the thin portion 56 and the thick portion 58 in the peripheral part 24, the sharing ratio between the rates of front and rear thickness changes in the changing region 60, 60 can be set as appropriate. That is, in the third embodiment described above, the front and rear contributions to the amount of thickness change (Tb' - Ta') in the changing region 60 is set equally, but as shown in FIGS. 17 to 20, the front contribution can be differentiated from the rear contribution by means of setting the front contribution double or more than double the rear contribution, for example. In FIGS. 17 to 20 showing a contact lens 62 as a fourth embodiment, the front view is omitted because it is substantially the same as that of the third embodiment. Also, since FIGS. 17 to 20 showing the contact lens 62 of the fourth embodiment correspond to FIGS. 13 to 16 of the third embodiment, respectively, detailed description will be omitted by assigning the same numerals to the corresponding components.

[Example]

As an example of the present invention, a prototype of a contact lens according to the structure of the first embodiment described above was produced and tests were conducted thereon to verify the effects of enhanced wearing comfort and improved stability in the circumferential direction. The contact lens of such example has the amount of thickness change of the lens front surface 18 (front surface contribution) and the amount of thickness change of the lens rear surface 20 (rear surface contribution) equalized to each other in the circumferential direction in the changing region 34.

Also, as comparative examples, two types of contact lenses were prepared. Such contact lenses were produced as comparative examples to have the amount of thickness change in the circumferential direction only on the lens front surface 18 (Comparative Example 1) and only on the lens rear surface 20 (Comparative Example 2), respectively, in the changing region 34.

Each dimension of the contact lenses of the Example, Comparative Example 1, and Comparative Example 2 is as follows: The lens's curvature radius (BC) was 8.60 mm, the outer diameter (DIA) 14.5 mm, the central thickness (CT) 0.08 mm, the diopter power (Power) -3.00D, and the addition (ADD) +2.50D. Also, the angle $\theta_a$ around the geometric central axis 12 of the lens in the pair of thin portions 30, 30 was set at 40 degrees each, the angle $\theta_b$ around the geometric central axis 12 of the lens in the pair of thick portions 32, 32 at 40 degrees each, and the angle $\theta_{a-b}$ around the geometric central axis 12 of the lens in each changing region 34 at 50 degrees each. In addition, the maximum value of the thickness dimension: Ta of the pair of thin portions 30, 30 was set at 0.14 mm each, and the maximum value of the thickness dimension: Tb of the pair of thick portions 32, 32 at 0.34 mm each, respectively.

Table 1 below shows results of tests to confirm the enhancement of the wearing comfort and improvements to the stability in the circumferential direction of the contact lens regarding Example and Comparative Example 1 as well as Example and Comparative Example 2. The confirmation tests on the present Example were conducted by evaluating such contact lens in comparison with those of Comparative Examples 1 and 2 on the same eye.

More specifically, in the tests to confirm the enhancement of the wearing comfort of the contact lens, sensory evaluation results of the wearing feeling were first compared between Comparative Example 1 and Example of the contact lens on 10 eyes that felt foreign-body sensation wearing Comparative Example 1. Also, sensory evaluation results regarding the wearing feeling were compared in the same way between Comparative Example 2 and Example of the contact lens on 13 eyes that also felt foreign-body sensation wearing Comparative Example 2.

Meanwhile, in the tests to confirm any improvement to the stability of the contact lens in the circumferential direction, measurement results of stability in the circumferential direction of Comparative Example 1 and Example of the contact lens were compared on 8 eyes where instability was observed wearing Comparative Example 1. Also, regarding 9 eyes where instability was observed wearing Comparative Example 2, measurement results of stability in the circumferential direction of Comparative Example 2 and Example of the contact lens were compared. The stability in the circumferential direction of the contact lens was evaluated by measuring the displacement of the lens in the circumferential direction in a worn state after blinking of the eye, and the positioning in the circumferential direction was judged instable if any rotation of the lens by 15 degrees or more was found after 5 blinkings of the eye.

[Table 1]

| Lens's foreign-body sensation (10 eyes that felt foreign-body sensation wearing Comparative Example 1) | | |
|---|---|---|
| | Comparative Example 1 | Example |
| Felt no foreign-body sensation of the lens | 0 eye | 8 eyes |
| Felt some foreign body sensation of the lens | 10 eyes | 2 eyes |
| Lens's foreign-body sensation (13 eyes Comparative Example 2) that felt foreign-body sensation wearing | | |
| | Comparative Example 2 | Example |
| Felt no foreign-body sensation of the lens | 0 eye | 10 eyes |
| Felt some foreign body sensation of the lens | 13 eyes | 3 eyes |
| Lens's stability in the rotational direction (8 eyes where the lens was instable wearing Comparative Example 1) | | |
| | Comparative Example 1 | Example |
| Stable | 0 eye | 5 eyes |
| Instable | 8 eyes | 3 eyes |
| Lens's stability in the rotational direction (9 eyes where the lens was instable wearing Comparative Example 2) | | |
| | Comparative Example 2 | Example |
| Stable | 0 eye | 5 eyes |
| Instable | 9 eyes | 4 eyes |

Judging from the test results shown in Table 1 above, it is understood that the contact lens with the structure according to the present invention can exhibit excellent stability in the rotating direction of the lens in a worn state while providing excellent wearing comfort.

The present invention has been described so far, but the present invention is not to be interpreted in a way limited by the descriptions of the above embodiments and examples. The present invention can be implemented with certain aspects after various changes, revisions and improvements based on the knowledge of persons skilled in the art, although none of the examples are given here, and any of such aspects is included within the range of the present invention as long as it does not deviate from the spirit thereof.

Also, the contact lens with the structure according to the present invention can be made to meet various optical properties and geometric configurations and so forth required by many contact lens wearers by appropriately changing the setting of the values of the outer diameter (DIA), central thickness (CT), curvature radius (BC), optical properties of the optical part 22, inner and outer diameters of the peripheral part 24 and the like, and is often offered to the market as a series of products by combining multiple types with any of the above various parameters changed at appropriate intervals. For example, the configuration of the optical part 22 does not necessarily have to be laterally symmetrical across the vertical radial line 14, but in case of a bifocal lens or the like, the region for near vision can be set biased toward the nose in a worn state of the lens relative to the region for far vision, for example, and the present invention can be applied to such a contact lens.

Furthermore, the radial width of the peripheral part 24 where the thin portion 30 (56), thick portion 32 (58), and the changing region 34 (60) are set does not have to be kept constant all the way around, but can be formed with a radial width changing in the circumferential direction.

Also, the shape of the contact lens does not have to be in a perfect circle as shown in the previous embodiments, but can be in an oval shape. Moreover, the present invention can be implemented in making a lens using the truncation method wherein part of the outer periphery of the lens is made linear in the chordwise direction.

10, 52, 54, 62: Contact lens; 18: Lens front surface; 20: Lens rear surface; 22: Optical part; 24: Peripheral part; 30, 56: Thin portion; 32, 58: Thick portion; 34, 60: Changing region

## Claims

1. A contact lens (10, 52, 54, 62) having a convex lens front surface (18) and a concave lens rear surface (20) while being provided with an optical part (22) in its center portion and a peripheral part (24) around the optical part (22):

    the peripheral part (24) is provided with at least one thick portion (32, 58) and at least one thin portion (30, 56) away from each other in a circumferential direction which exhibit a positioning effect in the circumferential direction in a worn state;
    in a changing region (34, 60) provided between the thick and thin portions (30, 32, 56, 58) in the peripheral part (24) where a thickness dimension of the lens (10, 52, 54, 62) changes in the circumferential direction, the lens front surface (18) is given a front thickness change so as to get closer to the lens rear surface (20) from the thick portion (32, 58) toward the thin portion (30, 56) in the circumferential direction, while the lens rear surface (20) is given a rear thickness change so as to get closer to the lens front surface (18) from the thick portion (32, 58) toward the thin portion (30, 56) in the circumferential direction,
    the lens front and rear surfaces (18, 20) in the changing region (34, 60) slope in a direction of getting closer to each other from the thick portion (32, 58) toward the thin portion (30, 56) in the circumferential direction so that the difference between the thickness dimension of the thin portion (30, 56) and the thickness dimension of the thick portion (32, 58) is shared between the lens front and rear surfaces (18, 20),
    wherein the lens front and rear surfaces (18, 20) in the changing region (34, 60) have the rates of front and rear thickness changes gradually reduced to zero at both ends in the circumferential direction connecting to the thin portion (30) and the thick portion (32),
    the contact lens (10, 52, 54, 62) being **characterized in that** :

        the at least one thick portion (32) comprises a pair of thick portions (32) provided on left and right sides of the lens (10, 52) in the worn state, and
        the at least one thin portion (30) comprises a pair of thin portions (30) provided on upper and lower sides of the lens (10, 52) in the worn state.

2. The contact lens (10, 52, 54, 62) according to claim 1, wherein both the thick and thin portions (30, 32, 56, 58) in the peripheral part (24) are formed in a given length in the circumferential direction as a constant thickness region with no thickness change in the circumferential direction either on the lens front surface (18) or on the lens rear surface (20).

3. The contact lens (10, 52, 54, 62) according to claim 1 or 2, wherein both the front thickness change and the rear thickness change in the changing region (34, 60) of the peripheral part (24) are set by a smooth surface with no step in the circumferential direction on the lens front surface (18) and the lens rear surface (20), respectively.

4. The contact lens (10, 52, 54, 62) according to claim 3, wherein the lens front surface (18) and the lens rear surface (20) in the changing region (34, 60) are set by a surface configuration that is expressed by a continuous function equation in the circumferential direction.

5. The contact lens (10, 52, 54, 62) according to any one of claims 1-4, wherein on the lens front surface (18) and the lens rear surface (20) in the changing region (34, 60), respective maximum values of rates of front and rear thickness changes represented by a ratio of an amount of the thickness change relative to a circumferential length are both set at no more than an overall rate of thickness change in the changing region (34, 60) expressed by a following equation:

overall rate of thickness change in the changing region (34, 60) = (Tb - Ta) /$\theta_{a\text{-}b}$
where Ta is a thickness dimension of the thin portion (30, 56), Tb is the thickness dimension of the thick portion (32, 58), and $\theta_{a\text{-}b}$ is a central angle of the changing region (34, 60) corresponding to the circumferential length of the changing region (34, 60).

6. The contact lens (10, 54) according to claim 5, wherein the thickness change in the circumferential direction in the changing region (34, 60) is shared between the lens front and rear surfaces (18, 20) at a constant ratio entirely across the changing region (34, 60) by means of setting the rates of front and rear thickness changes in the lens front and rear surfaces (18, 20) respectively at a constant ratio relative to each other.

7. The contact lens (10, 54) according to claim 6, wherein a difference between the rates of front and rear thickness changes in the lens front and rear surfaces (18, 20) respectively is set at zero so that the thickness change in the circumferential direction in the changing region (34, 60) is shared between the lens front and rear surfaces (18, 20) at an equal ratio to each other.

8. The contact lens (10, 52, 54, 62) according to any one of claims 1-7, wherein the optical part (22) is formed with the front and rear surfaces (18, 20) that have no deviation of a center of gravity due to a prism setting.

9. The contact lens (10, 52, 54, 62) according to any one of claims 1-8, wherein the difference between the thickness dimensions of the thick portion (32, 58) and the thin portion (30, 56) is set within a range of 0.10 mm to 0.40 mm.

10. The contact lens (10, 52, 54, 62) according to any one of claims 1-9, wherein the thickness dimension of the thick portion (32, 58) is set within a range of 0.20 mm to 0.50 mm.

11. The contact lens (10, 52, 54, 62) according to any one of claims 1-10, wherein the thickness dimension of the thin portion (30, 56) is set within a range of 0.04 mm to 0.20 mm.

12. The contact lens (10, 52, 54, 62) according to any one of claims 1-11, wherein a maximum value of the rate of the thickness change in the circumferential direction in the changing region (34, 60) is set at not less than 0.40 $\times$ 10<-2> mm/angle around a central axis (12) of the lens (10, 52, 54, 62).

13. A manufacturing method of a contact lens (10, 52, 54, 62) as defined in any one of claims 1-12, the method being **characterized by** :

specifying each slope configuration in the circumferential direction of the changing region (34, 60) on the lens front and rear surfaces (18, 20) such that the les front and rear surfaces (18, 20) in the changing region (34, 60) slope in a direction of getting closer to each other from the thick portion (32, 58) toward the thin portion (30, 56) in the circumferential direction so that the difference between the thickness dimension of the think portion (30, 56) and the thickness dimension of the thick portion (32, 58) is shared between the lens front and rear surfaces (18, 20);
setting each of the thickness dimension of the thick and thin portions (30, 32, 56, 58) by concomitantly considering the slope configurations in the circumferential direction on the lens front and rear surfaces (18, 20) so as to determine front and rear surface configurations of the peripheral part (24); and then
manufacturing the lens (10, 52, 54, 62) using the peripheral part (24) provided with the front and rear surface configurations.

**Patentansprüche**

1. Kontaktlinse (10, 52, 54, 62) mit einer konvexen Linsenvorderfläche (18) und einer konkaven Linsenrückfläche (20), die mit einem optischen Teil (22) in ihrem Mittelabschnitt und einem peripheren Teil (24) um den optischen Teil (22) herum versehen ist, wobei der periphere Teil (24) mit wenigstens einem dicken Abschnitt (32, 58) und wenigstens einem dünnen Abschnitt (30, 56) voneinander beabstandet in einer Umfangsrichtung versehen ist, die in einem getragenen Zustand einen Positionierungseffekt in der Umfangsrichtung aufweisen;

in einem Änderungsbereich (34, 60), der zwischen den dicken und dünnen Abschnitten (30, 32, 56, 58) in dem peripheren Teil (24) vorgesehen ist, sich ein Dickenmaß der Linse (10, 52, 54, 62) in der Umfangsrichtung ändert, der Linsenvorderfläche (18) eine vordere Dickenänderung gegeben wird, um näher an die Linsenrückfläche (20) aus dem dicken Abschnitt (32, 58), in Richtung des dünnen Abschnitts (30, 56) in der Umfangsrichtung heranzukommen, während der Linsenrückfläche (20) eine rückwärtige Dickenänderung gegeben wird, um näher an die Linsenvorderfläche (18) von dem dicken Abschnitt (32, 58) in Richtung des dünnen Abschnitts (30, 56) in der Umfangsrichtung heranzukommen,

die Linsenvorder- und -rückflächen (18, 20) in dem Änderungsbereich (34, 60) in eine Richtung geneigt sind, um vom dicken Abschnitt (32, 58) in Richtung des dünnen Abschnitts (30, 56) in Umfangsrichtung näher zueinander zu kommen, so dass die Differenz zwischen dem Dickenmaß des dünnen Abschnitts (30, 56) und dem Dickenmaß des dicken Abschnitts (32, 58) zwischen den Linsenvorder- und -rückflächen (18, 20) geteilt ist,

wobei sich die Linsenvorder- und rückflächen (18, 20) in dem Änderungsbereich (34, 60) die Grade der vorderen und hinteren Dickenänderungen an beiden Enden in der Umfangsrichtung, die mit dem dünnen Abschnitt (30) und dem dicken Abschnitt (32) verbunden sind, graduell zu Null reduzieren,

wobei die Kontaktlinse (10, 52, 54, 62) **dadurch gekennzeichnet ist, dass**:

> der wenigstens eine dicke Abschnitt (32) ein Paar dicker Abschnitte (32) umfasst, die auf den linken und rechten Seiten der Linse (10, 52) im getragenen Zustand vorgesehen sind, und
>
> der wenigstens eine dünne Abschnitt (30) ein Paar dünner Abschnitte (30) umfasst, die an Ober- und Unterseiten der Linse (10, 52) im getragenen Zustand vorgesehen sind.

2. Kontaktlinse (10, 52, 54, 62) nach Anspruch 1, wobei sowohl die dicken als auch dünnen Abschnitte (30, 32, 56, 58) in dem peripheren Teil (24) in einer vorgegebenen Länge in der Umfangsrichtung als ein konstanter Dickenbereich ohne Dickenänderung in der Umfangsrichtung entweder auf der Linsenvorderfläche (18) oder auf der Linsenrückfläche (20) ausgebildet sind.

3. Kontaktlinse (10, 52, 54, 62) nach Anspruch 1 oder 2, wobei sowohl die vordere Dickenänderung als auch die hintere Dickenänderung in dem Änderungsbereich (34, 60) des peripheren Teils (24) durch eine glatte Oberfläche ohne Schritt in der Umfangsrichtung auf der Linsenvorderfläche (18) bzw. der Linsenrückfläche (20) eingestellt sind.

4. Kontaktlinse (10, 52, 54, 62) nach Anspruch 3, wobei die Linsenvorderfläche (18) und die Linsenrückfläche (20) im Änderungsbereich (34, 60) durch eine Oberflächenkonfiguration eingestellt sind, die durch eine kontinuierliche Funktionsgleichung in der Umfangsrichtung ausgedrückt wird.

5. Kontaktlinse (10, 52, 54, 62) nach einem der Ansprüche 1-4, wobei auf der Linsenvorderfläche (18) und der Linsenrückfläche (20) im Änderungsbereich (34, 60) entsprechende Maximalwerte von Graden von vorderen und hinteren Dickenänderungen, die durch ein Verhältnis eines Betrags der Dickenänderung relativ zu einer Umfangslänge dargestellt werden, beide auf nicht mehr als einen Gesamtdickenänderungsgrad im Änderungsbereich (34, 60) eingestellt sind, dargestellt in einer folgenden Gleichung:

$$\text{Gesamtgrad der Dickenänderung im Änderungsbereich (34, 60)} = (Tb - Ta) / \theta a\text{-}b$$

wobei Ta ein Dickenmaß des dünnen Abschnitts (30, 56) ist, Tb das Dickenmaß des dicken Abschnitts (32, 58) ist und $\theta_{a\text{-}b}$ ein zentraler Winkel des Änderungsbereichs (34, 60) ist, der der Umfangslänge des Änderungsbereichs (34, 60) entspricht.

6. Kontaktlinse (10, 54) nach Anspruch 5, wobei die Dickenänderung in der Umfangsrichtung in dem Änderungsbereich (34, 60) zwischen den Linsenvorder- und rückflächen (18, 20) in einem konstanten Verhältnis vollständig über den Änderungsbereich (34, 60) verteilt ist, indem die Grade der vorderen und hinteren Dickenänderungen in den Linsenvorder- und rückflächen (18, 20) jeweils in einem konstanten Verhältnis zueinander eingestellt werden.

7. Kontaktlinse (10, 54) nach Anspruch 6, wobei eine Differenz zwischen den Graden von vorderen und hinteren Dickenänderungen in den Linsenvorder- und rückflächen (18, 20) jeweils auf Null gesetzt ist, so dass die Dickenänderung in Umfangsrichtung in dem Änderungsbereich (34, 60) zwischen den Linsenvorder- und rückflächen (18, 20) in einem konstanten Verhältnis relativ zueinander geteilt wird.

EP 2 876 486 B1

8. Kontaktlinse (10, 52, 54, 62) nach einem der Ansprüche 1-7, wobei der optische Teil (22) mit den Vorder- und Rückflächen (18, 20) ausgebildet ist, die keine Abweichung eines Schwerpunktes aufgrund einer Prismeneinstellung aufweisen.

9. Kontaktlinse (10, 52, 54, 62) nach einem der Ansprüche 1-8, wobei die Differenz zwischen den Dickenmaßen des dicken Abschnitts (32, 58) und des dünnen Abschnitts (30, 56) in einem Bereich von 0,10 mm bis 0,40 mm festgelegt ist.

10. Kontaktlinse (10, 52, 54, 62) nach einem der Ansprüche 1-9, wobei das Dickenmaß des dicken Abschnitts (32, 58) in einem Bereich von 0,20 mm bis 0,50 mm festgelegt ist.

11. Kontaktlinse (10, 52, 54, 62) nach einem der Ansprüche 1-10, wobei das Dickenmaß des dünnen Abschnitts (30, 56) in einem Bereich von 0,04 mm bis 0,20 mm festgelegt ist.

12. Kontaktlinse (10, 52, 54, 62) nach einem der Ansprüche 1-11, wobei ein Maximalwert des Grades der Dickenänderung in Umfangsrichtung im Änderungsbereich (34, 60) auf nicht weniger als $0,40 \times 10^{-2}$ mm/Winkel um eine Mittelachse (12) der Linse (10, 52, 54, 62) eingestellt ist.

13. Herstellungsverfahren einer Kontaktlinse (10, 52, 54, 62), wie in einem der Ansprüche 1-12 definiert, wobei das Verfahren **gekennzeichnet ist durch**:

   Spezifizieren jeder Neigungskonfiguration in der Umfangsrichtung des Änderungsbereichs (34, 60) auf den Linsenvorder- und rückflächen (18, 20), so dass die Linsenvorder- und rückflächen (18, 20) in dem Änderungsbereich (34, 60) in eine Richtung geneigt sind, um vom dicken Abschnitt (32, 58) zum dünnen Abschnitt (30, 56) in der Umfangsrichtung näher zusammenzukommen, so dass die Differenz zwischen dem Dickenmaß des dünnen Abschnitts (30, 56) und dem Dickenmaß des dicken Abschnitts (32, 58) zwischen den Linsenvorder- und rückflächen (18, 20) geteilt wird;
   Festlegen jedes der Dickenmaße der dicken und dünnen Abschnitte (30, 32, 56, 58) **durch** gleichzeitiges Berücksichtigen der Neigungskonfigurationen in Umfangsrichtung auf den Linsenvorder- und rückflächen (18, 20), um Vorder- und Rückflächenkonfigurationen des peripheren Teils (24) zu bestimmen; und anschließend Herstellen der Linse (10, 52, 54, 62) unter Verwendung des peripheren Teils (24), der mit den Vorder- und Rückflächenkonfigurationen versehen ist.

**Revendications**

1. Lentille de contact (10, 52, 54, 62) comportant une surface avant de lentille convexe (18) et une surface arrière de lentille concave (20) tout en étant pourvue d'une partie optique (22) à sa portion centrale et d'une partie périphérique (24) autour de la partie optique (22), la partie périphérique (24) est pourvue d'au moins une portion épaisse (32, 58) et d'au moins une portion mince (30, 56) à l'écart l'une de l'autre dans un sens circonférentiel et présentant un effet de positionnement dans le sens circonférentiel dans un état porté ;
dans une région de changement (34, 60) prévue entre les portions épaisse et mince (30, 32, 56, 58) dans la partie périphérique (24) où une dimension d'épaisseur de la lentille (10, 52, 54, 62) change dans le sens circonférentiel, il est conféré, à la surface avant de lentille (18), un changement d'épaisseur avant de manière à se rapprocher de la surface arrière de lentille (20) depuis la portion épaisse (32, 58) vers la portion mince (30, 56) dans le sens circonférentiel, alors qu'il est conféré, à la surface arrière de lentille (20), un changement d'épaisseur arrière de manière à se rapprocher de la surface avant de lentille (18) depuis la portion épaisse (32, 58) vers la portion mince (30, 56) dans le sens circonférentiel,
les surfaces avant et arrière de lentille (18, 20) dans la région de changement (34, 20) s'inclinent dans un sens de rapprochement l'une de l'autre depuis la portion épaisse (32, 58) vers la portion mince (30, 56) dans le sens circonférentiel de sorte que la différence entre la dimension d'épaisseur de la portion mince (30, 56) et la dimension d'épaisseur de la portion épaisse (32, 58) soit partagée entre les surfaces avant et arrière de lentille (18, 20),
dans laquelle les taux de changement d'épaisseur avant et arrière des surfaces avant et arrière de lentille (18, 20) dans la région de changement (34, 60) diminuent progressivement à zéro aux deux extrémités dans le sens circonférentiel de raccordement à la portion mince (30) et à la portion épaisse (32),
la lentille de contact (10, 52, 54, 62) étant **caractérisée en ce que** :

   l'au moins une portion épaisse (32) comprend une paire de portions épaisses (32) prévues sur des côtés gauche et droit de la lentille (10, 52) dans l'état porté, et

l'au moins une portion mince (30) comprend une paire de portions minces (30) prévues sur des côtés supérieur et inférieur de la lentille (10, 52) dans l'état porté.

2. Lentille de contact (10, 52, 54, 62) selon la revendication 1, dans laquelle les portions épaisse et mince (30, 32, 56, 58) dans la partie périphérique (24) sont formées avec une longueur donnée dans le sens circonférentiel en tant qu'une région d'épaisseur constante sans changement d'épaisseur dans le sens circonférentiel sur la surface avant de lentille (18) ou sur la surface arrière de lentille (20).

3. Lentille de contact (10, 52, 54, 62) selon la revendication 1 ou 2, dans laquelle le changement d'épaisseur avant et le changement d'épaisseur arrière dans la région de changement (34, 60) de la partie périphérique (24) sont réglés par une surface lisse sans escalier dans le sens circonférentiel respectivement sur la surface avant de lentille (18) et sur la surface arrière de lentille (20).

4. Lentille de contact (10, 52, 54, 62) selon la revendication 3, dans laquelle la surface avant de lentille (18) et la surface arrière de lentille (20) dans la région de changement (34, 60) sont réglées par une configuration de surface qui est exprimée par une équation de fonction continue dans le sens circonférentiel.

5. Lentille de contact (10, 52, 54, 62) selon l'une quelconque des revendications 1-4, dans laquelle, sur la surface avant de lentille (18) et sur la surface arrière de lentille (20) dans la région de changement (34, 60), des valeurs maximales respectives de taux de changement d'épaisseur avant et arrière représentés par un rapport d'une quantité du changement d'épaisseur sur une longueur circonférentielle sont réglées au plus à un taux global de changement d'épaisseur dans la région de changement (34, 60) exprimé par une équation suivante :

taux global de changement d'épaisseur dans la région de changement (34, 60)

$= (Tb - Ta)/\theta a\text{-}b$

où Ta est une dimension d'épaisseur de la portion mince (30, 56), Tb est la dimension d'épaisseur de la portion épaisse (32, 58), et $\theta_{a\text{-}b}$ est un angle central de la région de changement (34, 60) correspondant à la longueur circonférentielle de la région de changement (34, 60).

6. Lentille de contact (10, 54) selon la revendication 5, dans laquelle le changement d'épaisseur dans le sens circonférentiel dans la région de changement (34, 60) est partagé entre les surfaces avant et arrière de lentille (18, 20) à un rapport constant sur toute la région de changement (34, 60) au moyen du réglage des taux de changement d'épaisseur avant et arrière respectivement dans les surfaces avant et arrière de lentille (18, 20) à un rapport constant l'un à l'autre.

7. Lentille de contact (10, 54) selon la revendication 6, dans laquelle une différence entre les taux de changements d'épaisseur avant et arrière respectivement dans les surfaces avant et arrière de lentille (18, 20) est réglée à zéro de sorte que le changement d'épaisseur dans le sens circonférentiel dans la région de changement (34, 60) soit partagé entre les surfaces avant et arrière de lentille (18, 20) à un rapport égal l'un à l'autre.

8. Lentille de contact (10, 52, 54, 62) selon l'une quelconque des revendications 1-7, dans laquelle la partie optique (22) est formée avec les surfaces avant et arrière (18, 20) n'ayant aucun écart d'un centre de gravité en raison d'un réglage de prisme.

9. Lentille de contact (10, 52, 54, 62) selon l'une quelconque des revendications 1-8, dans laquelle la différence entre les dimensions d'épaisseur de la portion épaisse (32, 58) et de la portion mince (30, 56) est réglée à l'intérieur d'une plage de 0,10 mm à 0,40 mm.

10. Lentille de contact (10, 52, 54, 62) selon l'une quelconque des revendications 1-9, dans laquelle la dimension d'épaisseur de la portion épaisse (32, 58) est réglée à l'intérieur d'une plage de 0,20 mm à 0,50 mm.

11. Lentille de contact (10, 52, 54, 62) selon l'une quelconque des revendications 1-10, dans laquelle la dimension d'épaisseur de la portion mince (30, 56) est réglée à l'intérieur d'une plage de 0,04 mm à 0,20 mm.

**12.** Lentille de contact (10, 52, 54, 62) selon l'une quelconque des revendications 1-11, dans laquelle une valeur maximale du taux de changement d'épaisseur dans le sens circonférentiel dans la région de changement (34, 60) est réglée au moins à 0,40 x 10 < -2 > mm/angle autour d'un axe central (12) de la lentille (10, 52, 54, 62).

**13.** Procédé de fabrication d'une lentille de contact (10, 52, 54, 62) selon l'une quelconque des revendications 1-12, le procédé étant **caractérisé par** :

la spécification de chaque configuration d'inclinaison dans le sens circonférentiel de la région de changement (34, 60) sur les surfaces avant et arrière de lentille (18, 20) de sorte que les surfaces avant et arrière de lentille (18, 20) dans la région de changement (34, 60) s'inclinent dans un sens de rapprochement l'une de l'autre depuis la portion épaisse (32, 58) vers la portion mince (30, 56) dans le sens circonférentiel de sorte que la différence entre la dimension d'épaisseur de la portion mince (30, 56) et la dimension d'épaisseur de la portion épaisse (32, 58) soit partagée entre les surfaces avant et arrière de lentille (18, 20) ;

le réglage de chaque dimension d'épaisseur des portions épaisse et mince (30, 32, 56, 58) en prenant en compte parallèlement les configurations d'inclinaison dans le sens circonférentiel sur les surfaces avant et arrière de lentille (18, 20) de manière à déterminer des configurations de surface avant et arrière de la partie périphérique (24) ; puis

la fabrication de la lentille (10, 52, 54, 62) en utilisant la partie périphérique (24) pourvue des configurations de surface avant et arrière.

# FIG.1

# FIG.2

# FIG.3

# FIG.4A

# FIG.4B

# FIG.5

(THICKNESS DIMENSION) $t$

THICK PORTION 32

CHANGING REGION 34

$Tb$

FRONT SURFACE CONTRIBUTION

REAR SURFACE CONTRIBUTION

$Ta$

$0$ (ANGLE AROUND CENTRAL AXIS) $\theta$ DEGREE

$90$

THIN PORTION 30

# FIG.6

# FIG.7

# FIG.8

# FIG.9

# FIG.10

# FIG.11

# FIG.12

# FIG.13

# FIG.14

# FIG.15

# FIG.16

(THICKNESS DIMENSION) $t$

THICK PORTION 58

CHANGING REGION 60

FRONT SURFACE CONTRIBUTION

REAR SURFACE CONTRIBUTION

$Tb'$

$Ta'$

-90　(ANGLE AROUND CENTRAL AXIS)　90

$\theta$ DEGREE

THIN PORTION 56

# FIG.17

26

# FIG.18

# FIG.19

# FIG.20

(THICKNESS DIMENSION) t

THICK PORTION 58

CHANGING REGION 60

Tb'

FRONT SURFACE CONTRIBUTION

Ta'

REAR SURFACE CONTRIBUTION

−90

(ANGLE AROUND CENTRAL AXIS)
θ DEGREE

90

THIN PORTION 56

**EP 2 876 486 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 48013048 U
- JP 11258553 A
- JP 8304745 A
- US 5100225 A
- EP 2278387 A
- US 2004075807 A
- WO 2004010204 A